## Europäisches Patentamt
## European Patent Office
## Office européen des brevets

(19)

(11) Numéro de publication: **0 112 779**
**B1**

(12)

# FASCICULE DE BREVET EUROPÉEN

(45) Date de publication du fascicule du brevet:
**08.04.87**

(51) Int. Cl.⁴: **B 60 D 1/14**, B 60 P 3/12

(21) Numéro de dépôt: **83402506.6**

(22) Date de dépôt: **22.12.83**

(54) Barre d'accrochage destinée au remorquage des véhicules.

(30) Priorité: **23.12.82 FR 8221959**

(43) Date de publication de la demande:
**04.07.84 Bulletin 84/27**

(45) Mention de la délivrance du brevet:
**08.04.87 Bulletin 87/15**

(84) Etats contractants désignés:
**AT BE CH DE GB IT LI LU NL SE**

(56) Documents cité:
**BE-A-706 454**
**DE-A-1 960 154**
**DE-A-2 327 465**
**DE-A-2 619 830**
**DE-U-1 952 311**
**FR-A-2 344 207**
**GB-A-2 059 896**
**US-A-2 584 696**
**US-A-2 886 344**
**US-A-3 353 843**
**US-A-4 374 593**

(73) Titulaire: **Société Anonyme MOTTEZ, 108 rue du Général Leclerc, F-59280 Armentieres (Nord) (FR)**

(72) Inventeur: **Mottez, Henri, 2 Avenue de Dunkerque, Lille (Nord) (FR)**

(74) Mandataire: **Lepage, Jean- Pierre, Cabinet Lepage & Aubertin Innovations et Prestations 23/25, rue Nicolas Leblanc B.P. 1069, F-59011 Lille Cédex 1 (Nord) (FR)**

EP 0 112 779 B1

LIBER, STOCKHOLM 1987

## Description

L'invention est relative à une barre d'accrochage destinée au remorquage des véhicules. Elle trouvera son application dans domaine des véhicules routiers.

Actuellement, les législations nationales en matière de sécurité routière s'orientent vers l'interdiction de l'utilisation d'éléments souples pour le remorquage des véhicules. En effet, ces liaisons souples n'offrent pas une sécurité suffisante car elles ne permettent pas au véhicule tracteur de controler le mouvement du véhicule dépanné. En particulier, lorsque le premier véhicule freine brusquement, le chauffeur du second véhicule doit réagir très rapidement s'il veut àviter de percuter l'arrière du véhicule qui le précède.

On propose actuallement différents types de barres d'accrochage constitués par un élément rigide muni à chacune de ses extrémités de moyens de préhension qui viennent s'adapter sur des moyens d'accrochage prévus sur les véhicules.

En particulier, il est connu du FR - U - 2.344.207, une barre d'accrochage constituée par un tube, présentant à chacune de ses extrémités amovibles, une manille, et prévues telles qu'elles soient immobilisées dans le prolongement du tube.

Toutefois, cette réalisation, bien que très rigide pose des problèmes pour son adaptation sur le véhicule, du fait même de la constitution des moyens de préhension trop rigides et qui se déforment facilement, ce qui rend ensuite, inutilisable, la barre d'accrochage.

Par ailleurs, pour faciliter la mise en place des barres d'accrochage sur les crochets des véhicules, certains dispositifs ont été réalisés avec des moyens de préhension articulés. Toutefois, ces articulations présentent l'inconvénient de rompre la liaison rigide établie entre les deux véhicules et, lors de manoeuvre imprévue, les extrémités des barres d'accrochage peuvent se détériorer et déformer les parties des carrosseries situées à proximité des crochets de remorquage.

Le but principal de la présente invention est de proposer une barre d'accrochage destinée au remorquage de, véhicules qui supprime ces inconvénients. Ainsi, on propose une barre d'accrochage qui exclut toute possibilité de contact entre les extrémités de la barre et les parties des véhicules autres que les crochets de remorquage. La barre selon l'invention, autorise uniquement des déplacements relatifs dans un plan horizontal, autour d'axes verticaux situés au niveau des crochets de remorquage.

Un autre but de la présente invention est de proposer une barre d'accrochage dont l'utilisation est simple et rapide, et dont la réalisation nécessite un minimum de pièces.

D'autres buts et avantages de la présente invention apparaîtront au cours de la description qui va suivre, qui n'est donnée qu'à titre indicatif et qui n'a pas pour but de la limiter.

Selon la présente invention, la barre d'accrochage destinée au remorquage des véhicule est constituée par un tube comportant é chacune de ses extrémités une manille, chacune des extrémités du tube présentant des moyens pour maintenir la manille correspondante dans le prolongement du tube, caractérisée par le fait que les dits moyens se présentent sous la forme d'une butée qui fait saillie de part et d'autre du tube, et dont la direction est inclinée par rapport à l'axe d'articulation de la manille. Un mode particulier de realisation de cette invention est caractérisé par le fait que la butée est soudée sur l'extrémité du tube, celle-ci étant découpée pour épouser la forme extérieure de la butée. Un autre mode particulier est caractérisé par le fait que l'angle défini par la direction de la butée et par l'axe d'articulation de la manille est compris entre 30 et 60 degrés.

L'invention sera mieux comprise si l'on se réfère à la description ci-dessous ainsi qu'aux dessins en annexe qui en font partie intégrante.

La figure 1 illustre une barre d'accrochage selon l'invention.

La figure 2 illustre un mode préférentiel de réalisation des extrémités de la barre d'accrochage selon la figure 1.

La figure 3 schématise la liaison entre deux tronçons constituant la barre d'accrochage selon la figure 1.

La barre d'accrochage, selon l'invention, sera utilisée pour le remorquage de tout véhicule équipé de crochets destinés à cet effet, et elle assurera une parfaite sécurité au cours des opérations de remorquage.

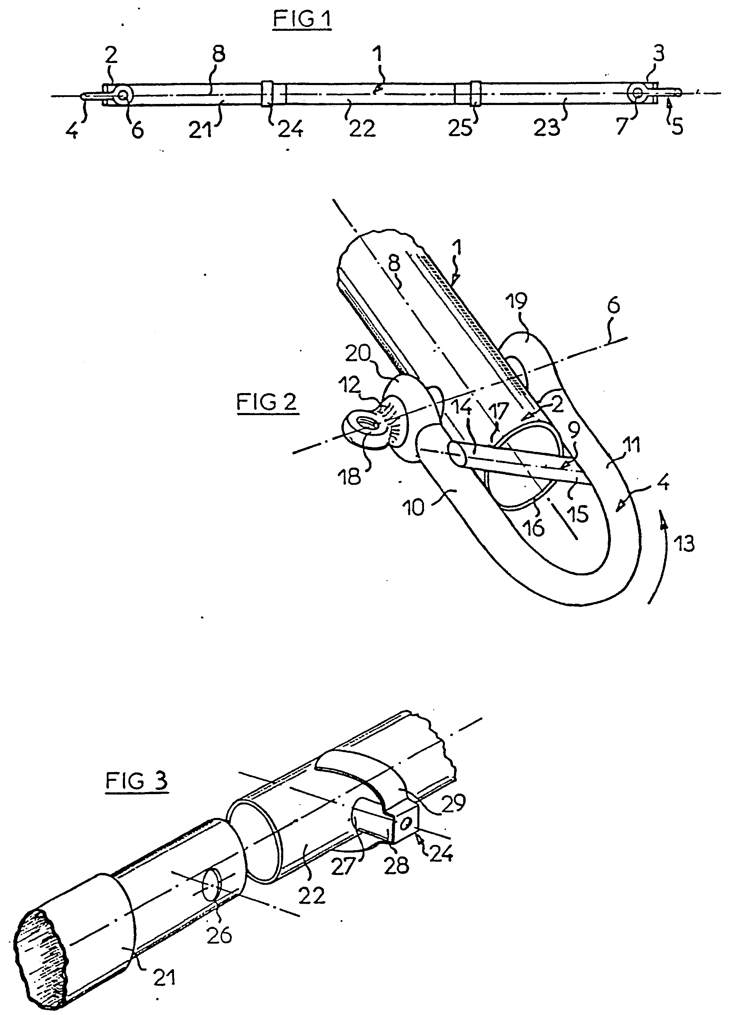

La barre illustrée à la figure 1 est constituée dans sa partie centrale par un élément rigide, généralement un tube métallique non exclusivement de section circulaire. Ce tube sera désigné par le repère 1. A chacune de ses extrémités, 2 et 3, il comportera des moyens de préhension constitués par des manilles, respectivement les repères 4 et 5. Ces manilles sont articulées sur les extrémités du tube, respectivement suivant les axes 6 et 7, disposées perpendiculairement à l'axe longitudinal 8 du tube 1, et dans le même plan.

La barre d'accrochage selon l'invention, présente à chacune de ses extrémités des moyens pour maintenir les manilles dans le prolongement du tube. Ces moyens suppriment les possibilités de rotation des manilles autour de leur axe d'articulation, et, par conséquent, même en cas de manoeuvres imprévues, les parties terminales de la barre d'accrochage ne peuvent pas faire saillie au-delà des manilles, et elles peuvent venir tout au plus en contact avec le crochet correspondant. Ainsi, le crochet du véhicule ne peut se déplacer qu'entre la partie arrondie de la manille et la partie terminale du tube qui sera renforcée. De plus, cette distance sera suffisament petite pour limiter l'amplitude des déplacements relatifs.

Un mode préférentiel de réalisation de ces

2

moyens est illustré é la figure 2, qui schématise, par exemple, l'extrémité 2 du tube 1.

Les moyens de maintien de la manille 4 se présentent sous la forme d'une butée 9 disposée transversalement à l'axe 8 du tube 1, qui fait saillie de part et d'autre du tube 1 et dont la direction est inclinée par rapport à l'axe d'articulation de la manille. Plus précisément, la butée 9 est disposée par rapport à l'axe d'articulation 6 de la manille vers l'extérieur du tube afin qu'elle se trouve au même niveau que les parties rectilignes 10 et 11 de la manille 4 avec lesquelles elle interfère. Par conséquent, lorsque l'axe 12 de la manille est en place, la rotation de la manille suivant la flèche 13 est empêchée par l'interférence de la partie 10 avec l'extrémité 14 de la butée située du même côté, et la rotation dans le sens opposé est interdite par la butée de la partie 11 de la manille sur l'extrémité 15 de la butée 9.

D'une manière avantageuse, la butée sera disposée sur le bord 10 du tube, et son positionnement sera assuré par des découpes 17 réalisées sur le tube é partir du bord 16 dans lesquelles vient s'engager en partie la butée 9. Sur la figure 2, la butée 9 est constituée par un morceau de rond soudé sur le tube 1 suivant les découpes semi-circulaires 17.

L'inclinaison de l'axe de la butée 9 par rapport à l'axe d'articulation de la manille 6 sera déterminée suivant les diamètres des parties 10 et 11 de la manille et le diamètre de la butée 9. Cette inclinaison devra être minimale pour limiter les débattements possibles. L'angle défini par la direction de la butée 9 et par l'axe d'articulation 6 de la manille 4 sera compris, d'une manière avantageuse, entre 30 et 60 degrés.

La goupille 12 qui constitue l'articulation entre la manille 4 et le tube 1 présentera, avantageusement, à l'une de ses extrémités un oeillet 18 dans lequel sera introduit un lien souple relié au tube, et l'autre extrémité sera taraudée pour être introduite dans l'anneau 19 de la manille 4. La goupille 12 sera désolidarisée de la manille lorsque l'on veut mettre en place la barre d'accrochage. En effet, on commence par mettre en place la manille sur le crochet, ensuite on introduit le tube entre les deux branches de la manille en veillant à incliner le tube pour le passage des anneaux 19 et 20 au droit de la butée 9, avant d'introduire la goupille 12 dans le tube.

La portée de cette invention n'est pas limitée au cas d'un tube circulaire, car on peut également utiliser un tube de section carrée é la condition que l'axe de la butée passe par son centre. L'Homme de l'Art pourra déterminer facilement les conditions géométriques à réaliser.

Afin de réduire son encombrement, la barre d'accrochage, selon l'invention, sera réalisée, de préférence, en plusieurs tronçons comme cela est illustré à la figure 1. Il suffit que les différents tronçons soient encastrés les uns par rapport aux autres pour maintenir la rigidité de la barre. La barre 1 est constituée, par exemple, par trois tronçons 21, 22, 23 réunis à l'aide des goupilles 24 et 25.

La figure 3 illustre, à titre d'exemple, la liaison entre les tronçons 21 et 22. L'extrémité du tronçon 21 sera introduite à l'intérieur du tube constituant le tronçon 22, et présentera deux perçages 26 au voisinage de son extrémité dans lesquels est introduite la goupille 24 qui peut coulisser au-travers des trous 27 réalisés sur le tronçon 22. La goupille 24 est constituée par un axe 28 dont l'une des extrémités est munie d'une agrafe 29 qui vient épouser, d'une manière élastique, le contour extérieur du tronçon 22. Pour introduire la goupille 24 à travers les deux tubes, il suffit d'exercer une pression radiale afin de faire coulisser l'agrafe sur la surface latérale du tube et l'amener dans une position verrouillée. On obtient ainsi un verrouillage d'une grande sécurité.

Le mode de réalisation qui vient d'être décrit n'est donné qué titre indicatif, et d'autres mises en oeuvre de la présente invention, à la portée de l'Homme de l'Art, pourraient être adoptées sans pour autant sortir du cadre de celle-ci.

**Revendications**

1. Barre d'accrochage destinée au remorquage des véhicules, constituée par un tube (1) comportant à chacune de ses extrémités (2) une manille (4), chacune des extrémités du tube présentant des moyens pour maintenir la manille (4) correspondante dans le prolongement du tube (11, caractérisée par le fait que les dits moyens se présentent sous la forme d'une butée (9) qui fait saillie de part et d'autre du tube (1), et dont la direction est inclinée par rapport à l'axe d'articulation (6) de la manille (4).

2. Barre d'accrochage selon la revendication 1, caractérisée par le fait que la butée (9) est soudée sur l'extrémité du tube (1), celle-ci étant découpée pour épouser la forme extérieure de la butée (9).

3. Barre d'accrochage selon la revendication 1, caractérisée par le fait que l'angle défini par la direction de la butée (9) et par l'axe (6) d'articulation de la manille (4) est compris entre 30 et 60 degrés.

**Patentansprüche**

1. Ankupplungsstange zum Abschleppen von Fahrzeugen, aus einem Rohr (1), das an jedem seiner Enden (2) einen Schäkel (4) aufweist, wobei jedes der Enden des Rohrs mit Mitteln versehen ist, um den entsprechenden Schäkel (4) in der Verlängerung des Rohrs (1) zu halten, dadurch gekennzeichnet, daß die besagten Mittel die Form eines Anschlags (9) haben, der auf beiden Seiten des Rohrs (1) übersteht und dessen Richtung bezüglich der Gelenkachse (6) des Schäkels (4) geneigt ist.

2. Ankupplungsstange gemäß Anspruch 1, dadurch gekennzeichnet, daß der Anschlag (9) auf das Ende des Rohrs (1) aufgeschweißt ist, wobei dieses Ende ausgeschnitten ist, um sich an die äußere Form des Anschlags (9) anzuschmiegen.

3. Ankupplungsstange gemäß anspruch 1, dadurch gekennzeichnet, daß der Winkel zwischen der Richtung des Anschlags (9) und der Gelenkachse (6) des Schäkels (4) zwischen 30 und 60 Grad liegt.

## Claims

1. A hooking rod intended to tow vehicles, comprising a pipe (1) provided with a shackle (4) at each of its ends (2), each of the pipe ends having means for maintaining the corresponding shackle (4) in the extension of the pipe (1), characterized by the fact that said means are in the shape of a thrust (9) which projects on both sides of the pipe (1) and whose the direction is inclined with respect to the articulation axis (8) of the shackle (4).

2. A hooking rod according to claim 1, characterized by the fact that the thrust (9) is welded with the end of the pipe (1), said end being cut out in order to take the exact outer shape of the thrust (9).

3. A hooking rod according to claim 1, characterized by the fact that the angle defined by the direction of the thrust (9) and the articulation axis (8) of the shackle (4) is included between 30 and 60 degrees.

FIG 1

FIG 2

FIG 3